# EUROPÄISCHE PATENTSCHRIFT

(11) **EP 2 732 546 B1**
(45) Veröffentlichungstag und Bekanntmachung des Hinweises auf die Patenterteilung: **20.05.2015**
(21) Anmeldenummer: 12721735.4
(22) Anmeldetag: 13.04.2012
(51) Int. Cl.: H02P 6/18

(54) **VERFAHREN ZUR BESTIMMUNG DER DREHLAGE DES ROTORS EINER ELEKTRISCHEN MASCHINE**
METHOD FOR DETERMINING THE ROTARY POSITION OF THE ROTOR OF AN ELECTRIC MACHINE
PROCÉDÉ PERMETTANT DE DÉTERMINER LA POSITION DE ROTATION DU ROTOR D'UNE MACHINE ÉLECTRIQUE

(30) Priorität: 13.07.2011 DE 102011051793
(43) Veröffentlichungstag der Anmeldung: 21.05.2014
(73) Patentinhaber: Strothmann, Rolf, 66123 Saarbrücken (DE)
(72) Erfinder: Strothmann, Rolf, 66123 Saarbrücken (DE)
(74) Vertreter: Bernhardt, Reinhold
(86) Internationale Anmeldenummer: PCT/DE2012/100103
(87) Internationale Veröffentlichungsnummer: WO 2013/007246

(56) Entgegenhaltungen:
- US-A- 5 804 939
- US-A1- 2006 006 833
- US-A1- 2006 028 161

## Beschreibung

Die Erfindung betrifft ein Verfahren zur Bestimmung der Drehlage des Rotors einer elektrischen Maschine, die im Stern verschaltete Phasenstränge aufweist, wobei ein für die Drehlage des Rotors innerhalb einer halben magnetischen Periode repräsentatives Messsignal (M) ermittelt wird.

Ein solches Verfahren ist aus der EP 1 005 716 B1 bekannt. Die Bestimmung der Rotordrehlage nach diesem bekannten Verfahren beruht darauf, dass die Induktivitäten der Phasenstränge infolge sich ändernder Sättigungsgrade der Polwicklungskerne und sich ändernder Geometrieeinflüsse von der Drehlage des Rotors abhängen. Innerhalb einer halben magnetischen Periode besteht zwischen der Phasenstranginduktivität und der Rotordrehlage ein eindeutiger Zusammenhang. Die Bestimmung eines für die Induktivität eines oder mehrerer Phasenstränge und damit für die Rotordrehlage repräsentativen Messsignals (M) kann durch induktive Kopplungen zwischen den Phasensträngen erschwert sein.

Der Erfindung liegt die Aufgabe zugrunde, ein neues Verfahren der eingangs erwähnten Art zu schaffen, bei dem der störende Einfluss von Kopplungsinduktivitäten bei der Bestimmung des Messsignals (M) verringert ist.

Das diese Aufgabe lösende Verfahren nach der Erfindung ist dadurch gekennzeichnet, dass zu einem Messzeitpunkt (t₀) unter Zwingen des Sternpunkts auf ein bestimmtes Potential an die Enden sämtlicher Phasenstränge eine bestimmte Spannung gelegt wird, dass zu einem auf den Messzeitpunkt (t₀) folgenden Zeitpunkt (t₁) an die Enden von einem der Phasenstränge eine von der bestimmten Spannung abweichende Spannung gelegt wird und dass aus dem Strom (I), der sich ab dem Messzeitpunkt (t₀) über den folgenden Zeitpunkt (t₁) hinaus in einer den Sternpunkt auf das bestimmte Potential zwingenden Verbindung entwickelt, das Messsignal (M) abgeleitet wird.

Unmittelbar nach dem Messzeitpunkt (t₀) fließt in der den Sternpunkt auf das bestimmte Potential zwingenden Verbindung kein Strom, weil die Summe der dem Sternpunkt zufließenden und vom Sternpunkt abfließenden Ströme auch in dieser Phase noch gleich null ist. Je nachdem, ob das Potential am Sternpunkt zum Messzeitpunkt (t₀) von dem bestimmten Potential verschieden war oder nicht, beginnt nach dem Messzeitpunkt (t₀) in der Verbindung ein Strom zu fließen. Indem zu dem Zeitpunkt (t₁), der auf den Messzeitpunkt (t₀) folgt, die Spannung über nur einem der Phasenstränge geändert wird, die Spannung über den übrigen Phasensträngen aber gleich bleibt, können für die weitere Entwicklung des Stromes (I) in der Verbindung nur die Induktivität und der Widerstand dieses einen Phasenstrangs maßgebend sein. Stromänderungen in diesem Phasenstrang führen nicht auch zu Stromänderungen in den übrigen Phasensträngen. Induktive Kopplungen zwischen den Induktivitäten der Phasenstränge wirken sich auf die Entwicklung des Stromes (I) in der Verbindung daher nur in geringem Maße aus.

Bei der Durchführung des erfindungsgemäßen Verfahrens können z.B. zum Messzeitpunkt (t₀) sämtliche Phasenstränge mit dem Potentialnullpunkt verbunden sein und zu dem folgenden Zeitpunkt (t₁) wird einer der Phasenstränge an eine Gleichspannung (U_{B}) gelegt.

Zweckmäßig handelt es sich bei dieser Gleichspannung um eine im Betrieb der elektrischen Maschine durch Impulsweitenmodulation verwendete Betriebsspannung.

Vorzugsweise wird der Anstieg des Stromes (I) mit der Zeit (t) ermittelt, wobei als Messsignal (M) insbesondere die Differenz der Anstiege ab dem dem Messzeitpunkt (t₀) folgenden Zeitpunkt (t₁) und ab dem Messzeitpunkt (t₀) dient.

Zweckmäßig erfolgt die Ermittlung des Anstiegs während einer noch linearen Anstiegsphase des Stromes (I).

Vorzugsweise wird das Sternpunktpotential zu dem Messzeitpunkt (t₀) auf den Potentialnullpunkt gezwungen. Zum Zwingen des Sternpunktpotentials auf ein bestimmtes Potential, insbesondere den Potentialnullpunkt, wird eine Verbindung mit dem bestimmten Potential über einen Messwiderstand hergestellt.

Zweckmäßig wird der Sternpunkt unmittelbar nach Ermittlung der Anstiege wieder freigegeben, d.h. die Verbindung getrennt.

Es versteht sich, dass die Differenz zwischen dem folgenden Zeitpunkt (t₁) und dem Messzeitpunkt (t₀) klein gegen die Dauer der Impulszyklen bei der Impulsweitenmodulation gewählt wird, so dass die Drehlagebestimmung den Betrieb der elektrischen Maschine nicht stört.

Die Erfindung wird nachfolgend anhand beiliegender Zeichnungen weiter erläutert. Es zeigen:
- Fig. 1: eine Schemadarstellung einer im Stern verschalteten elektrischen Maschine mit Einrichtungen zum Zwingen des Sternpunkts auf ein bestimmtes Potential, und
- Fig. 2: ein die Bestimmung eines von der Rotordrehlage abhängigen Messsignals (M) erläuterndes Diagramm.

Eine elektrische Maschine umfasst drei im Stern verschaltete Phasenstränge 1,2 und 3, von denen jeder eine Induktivität 4 und einen Ohm'schen Widerstand 5 aufweist.

Der Sternpunkt 6 der (im Übrigen nicht gezeigten) elektrischen Maschine lässt sich über einen Schalter 8 und einen Widerstand 9 mit dem Spannungsnullpunkt verbinden. Eine Einrichtung 7 dient der Erfassung und Auswertung einer über dem Messwiderstand 9 abfallenden Spannung UM.

Die Anschlüsse der Phasenstränge 1,2,3 sind, z.B. zum Betrieb der elektrischen Maschine durch Impulsweitenmodulation, abwechselnd mit einer Betriebsspannung U_{B} oder dem Spannungsnullpunkt verbindbar.

Während die Ohm'schen Widerstände 5 der Phasenstränge 1,2,3 unabhängig von der Drehposition des Rotors konstant sind, hängen die Induktivitäten 4 innerhalb jeder halben magnetischen Periode infolge sich ändernder magnetischer Sättigung durch das Erregerfeld und sich ändernder geometrischer Einflüsse eindeutig von der Drehlage des Rotors ab.

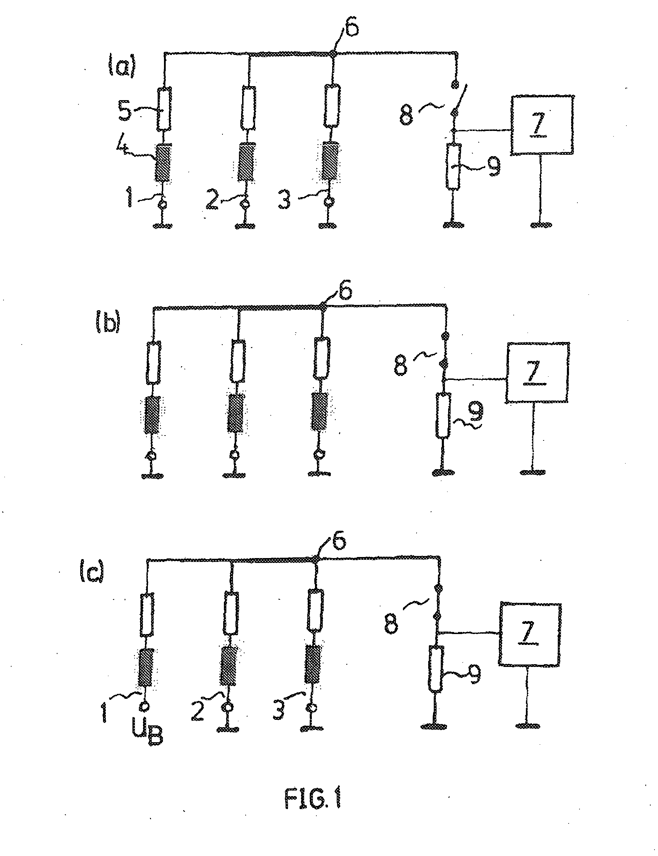

Zur Bestimmung der Drehlage des Rotors, ggf. während des Betriebs der elektrischen Maschine durch Impulsweitenmodulation wird in einem ersten Schritt z.B. der in Fig. 1a gezeigte Schaltzustand hergestellt, in welchem alle drei Phasenstränge 1,2,3 mit dem Spannungsnullpunkt verbunden sind. Am Sternpunkt 6 herrscht irgendein von den induzierten und selbstinduzierten Spannungen in den Phasensträngen herrührendes Potential. Im nächsten Schritt wird zu einem Messzeitpunkt t₀ durch Betätigung des Schalters 8 der Sternpunkt 6 über den Widerstand 9 gemäß Fig. 1b mit dem Spannungsnullpunkt verbunden und durch diesen Schaltvorgang das Potential am Sternpunkt auf den Spannungsnullpunkt gezogen. Der genannte Schaltvorgang löst ferner die Erfassung und Auswertung des nun durch einen ansteigenden Strom I über dem Messwiderstand 9 erzeugten Spannungsabfalls U_{M} durch die Einrichtung 7 aus.

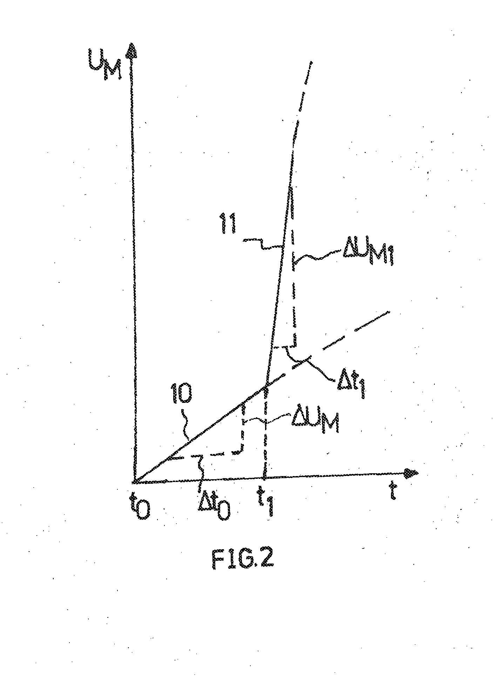

In den mit dem Spannungsnullpunkt und dem Sternpunkt 6 verbundenen Phasensträngen 1,2,3 fließen infolge Induktion und Selbstinduktion Ströme unterschiedlichen Vorzeichens, deren Summe gleich null ist. Dies gilt auch noch unmittelbar nach Schließen des Schalters 8. Maßgebend für den Anstieg des Stromes I bzw. der durch den Strom I über dem Messwiderstand 9 erzeugten Messspannung U_{M} nach Schließen des Schalters 8 sind neben den zum Schließzeitpunkt in den Phasensträngen 1,2,3 fließenden Strömen und induzierten Spannungen die parallel geschalteten Induktivitäten 4 und Widerstände 5 der Phasenstränge 1,2,3. Diese Größen bestimmen die Zeitkonstante für den Anstieg des Stromes I bzw. der Messspannung U_{M} mit der Zeit t bis zu einem Sättigungswert. Die Einrichtung 7 erfasst gemäß Fig. 2 den Anstieg (ΔU_{M0}/Δt₀) der Spannung UM mit der Zeit t, vorzugsweise während einer noch linearen Anstiegsphase 10.

Noch während der linearen Anstiegsphase 10 wird gemäß Fig. 1c zu einem Zeitpunkt t₁ beispielsweise an den Phasenstrang 1 die Betriebsspannung U_{B} gelegt. Wie Fig. 2 erkennen lässt, führt diese Änderung des Schaltzustands zu einem geänderten Anstieg (ΔU_{M1}/Δt1) der Spannung UM mit der Zeit t.

Maßgebend für den geänderten Anstiegswert, den die Einrichtung 7 während einer noch linearen Anstiegsphase 11 ermittelt, sind im Wesentlichen die von der Rotordrehlage abhängige Induktivität 4, der von Phasenstrang zu Phasenstrang konstante Widerstand 5 des Phasenstrangs 1 sowie der Anstiegswert in der vorangehenden Anstiegsphase 10.

Die Einrichtung 7 zur Erfassung und Auswertung der Messspannung UM ermittelt als von der Rotordrehlage abhängiges Messsignal M die Differenz zwischen den Anstiegen (ΔU_{M1}/Δt₁) - (ΔU_{M0}/Δt₁).

Unmittelbar nach der Ermittlung der beiden Anstiege wird der Sternpunkt 6 durch Öffnen des Schalters 8 wieder freigegeben. Der Messzeitraum t₁ - t₀ ist klein gegen die Dauer der Zyklen der Impulsweitenmodulation, so dass der Betrieb der elektrischen Maschine durch die beschriebene Drehlagebestimmung in keiner Weise gestört wird.

## Patentansprüche

1. Verfahren zur Bestimmung der Drehlage des Rotors einer elektrischen Maschine, die im Stern verschaltete Phasenstränge (1,2,3) aufweist, wobei eine für die Drehlage des Rotors innerhalb einer halben magnetischen Periode repräsentatives Messsignal (M) ermittelt wird,
**dadurch gekennzeichnet,**
**dass** zu einem Messzeitpunkt (t₀) unter Zwingen des Sternpunkts (6) auf ein bestimmtes Potential an die Enden sämtlicher Phasenstränge (1,2,3) eine bestimmte Spannung gelegt wird, dass zu einem auf den Messzeitpunkt (t₀) folgenden Zeitpunkt (t₁) an die Enden von einem der Phasenstränge (1,2,3) eine von der bestimmten Spannung abweichende Spannung gelegt wird und dass aus dem Strom (I), der sich ab dem Messzeitpunkt (t₀) über den folgenden Zeitpunkt (t₁) hinaus in einer den Sternpunkt (6) auf das bestimmte Potential zwingenden Verbindung entwickelt, das Messsignal (M) abgeleitet wird.

2. Verfahren nach Anspruch 1,
**dadurch gekennzeichnet,**
**dass** zur Ableitung des Messsignals (M) der Anstieg des Stroms (I(t)) mit der Zeit (t) bestimmt wird.

3. Verfahren nach Anspruch 2,
**dadurch gekennzeichnet,**
**dass** zur Ableitung des Messsignals (M) der Anstieg des Stroms (I) ab dem Messzeitpunkt (t₀) und ab dem folgenden Zeitpunkt (t₁) bestimmt werden.

4. Verfahren nach Anspruch 3,
**dadurch gekennzeichnet,**
**dass** als Messsignal (M) die Differenz der beiden Anstiege bestimmt wird.

5. Verfahren nach einem der Ansprüche 2 bis 4,
**dadurch gekennzeichnet,**
**dass** die Ermittlung des Anstiegs bzw. der Anstiege während einer noch linearen Anstiegsphase des Stroms I₍ₜ₎ erfolgt.

6. Verfahren nach einem der Ansprüche 1 bis 5,
**dadurch gekennzeichnet,**
**dass** das Sternpunktpotential zu dem Messzeitpunkt (t₀) auf den Potentialnullpunkt gezogen wird.

7. Verfahren nach einem der Ansprüche 1 bis 6,
**dadurch gekennzeichnet,**
**dass** zu dem Messzeitpunkt (t₀) sämtliche Phasenstränge (1,2,3) mit dem Potentialnullpunkt verbunden sind und zu dem folgenden Zeitpunkt (t₁) an einen der Phasenstränge eine Gleichspannung (U_{B}) gelegt wird.

8. Verfahren nach Anspruch 7,
**dadurch gekennzeichnet,**
**dass** die Gleichspannung (U_{B}) eine zum Betrieb der elektrischen Maschine durch Impulsweitenmodulation verwendete Betriebsspannung ist.

9. Verfahren nach einem der Ansprüche 2 bis 8,
**dadurch gekennzeichnet,**
**dass** die den Sternpunkt (6) auf das bestimmte Potential zwingende Vorrichtung unmittelbar nach Ermittlung des Anstiegs bzw. der Anstiege unterbrochen wird.

10. Verfahren nach einem der Ansprüche 1 bis 9,
**dadurch gekennzeichnet,**
**dass** das Sternpunktpotential über eine einen Messwiderstand (9) aufweisende Verbindung auf das bestimmte Potential gezogen wird.

11. Verfahren nach einem der Ansprüche 8 bis 10,
**dadurch gekennzeichnet,**
**dass** die Zeitdifferenz zwischen dem folgenden Zeitpunkt (t₁) und dem Messzeitpunkt (t₀) klein gegen die Dauer der Impulszyklen gewählt wird.

## Claims

1. Method for determining the rotary position of the rotor of an electric machine which has star-connected winding phases (1, 2, 3), wherein a measurement signal (M) which is representative of the rotary position of the rotor within half a magnetic period is determined, **characterized in that** at a point in time of the measurement (t₀), a specific voltage is applied to the ends of all of the winding phases (1, 2, 3) whilst forcing the neutral point (6) onto a specific potential, **in that**, at a point in time (t₁) following the point in time of the measurement (t₀), a voltage which differs from the specific voltage is applied to the ends of one of the winding phases (1, 2, 3), and **in that** the measurement signal (M) is derived from the current (I) which is developed after the point in time of the measurement (t₀) beyond the following point in time (t₁) in a connection which forces the neutral point (6) onto the specific potential.

2. Method according to Claim 1,
**characterized**
**in that**, in order to derive the measurement signal (M), the rise in the current (I(t)) over time (t) is determined.

3. Method according to Claim 2,
**characterized**
**in that**, in order to derive the measurement signal (M), the rise of the current (I) from the point in time of the measurement (t₀) on and from the following time (t₁) on are determined.

4. Method according to Claim 3,
**characterized**
**in that** the difference between the two rises is determined as measurement signal (M).

5. Method according to one of Claims 2 to 4,
**characterized**
**in that** the determination of the rise or rises is performed during a still linear rise phase of the current (I).

6. Method according to one of Claims 1 to 5,
**characterized**
**in that** the neutral point potential is drawn to the potential zero point at the measurement time (t₀).

7. Method according to one of Claims 1 to 6,
**characterized**
**in that**, at the point in time of the measurement (t₀), all of the winding phases (1, 2, 3) are connected to the potential zero point, and a DC voltage (U_{B}) is applied to one of the winding phases at the following time (t₁).

8. Method according to Claim 7,
**characterized**
**in that** the DC voltage (U_{B}) is an operating voltage used for operating the electric machine by means of pulse width modulation.

9. Method according to one of Claims 2 to 8,
**characterized**
**in that** the apparatus which forces the neutral point (6) onto the specific potential is interrupted directly after determination of the rise or rises.

10. Method according to one of Claims 1 to 9,
**characterized**
**in that** the neutral point potential is drawn to the specific potential via a connection having a shunt (9).

11. Method according to one of Claims 8 to 10,
**characterized**
**in that** the time difference between the following point in time (t₁) and the point in time of the measurement (t₀) is selected to be small in comparison with the duration of the pulse cycles.

## Revendications

1. Procédé pour déterminer la position en rotation du rotor d'une machine électrique qui comprend des conducteurs de phase (1, 2, 3) branchés en étoile, dans lequel on détermine un signal de mesure (M) représentatif pour la position en rotation du rotor à l'intérieur d'une demi-période magnétique,
**caractérisé en ce que**
à un instant de mesure (t₀) en imposant au centre de l'étoile (6) un potentiel déterminé, on applique une tension déterminée aux extrémités de tous les conducteurs de phase (1, 2, 3),
**en ce qu'**à un instant (t₁) suivant l'instant de mesure (t₀) on applique aux extrémités de l'un des conducteurs de phase (1, 2, 3) une tension qui diffère de la tension déterminée, et
**en ce que** l'on dérive le signal de mesure (M) à partir du courant (I) qui se développe à partir de l'instant de mesure (t₀) et au-delà de l'instant suivant (t₁) dans une connexion qui impose le potentiel déterminé au centre de l'étoile (6).

2. Procédé selon la revendication 1,
**caractérisé en ce que** pour dériver le signal de mesure (M) on détermine la croissance du courant (I(t)) au cours du temps (t).

3. Procédé selon la revendication 2,
**caractérisé en ce que** pour dériver le signal de mesure (M) on détermine la croissance du courant (I) à partir de l'instant de mesure (t₀) et à partir de l'instant suivant (t₁).

4. Procédé selon la revendication 3,
**caractérisé en ce que** l'on détermine à titre de signal de mesure (M) la différence des deux croissances.

5. Procédé selon l'une des revendications 2 à 4,
**caractérisé en ce que** la détermination de la croissance ou des croissances a lieu pendant une phase de croissance encore linéaire du courant.

6. Procédé selon l'une des revendications 1 à 5,
**caractérisé en ce que** le potentiel au centre de l'étoile est tiré à un potentiel nul à l'instant de mesure (t₀).

7. Procédé selon l'une des revendications 1 à 6,
**caractérisé en ce qu'**à l'instant (t₀) la totalité des conducteurs de phase (1, 2, 3) sont reliés au point à potentiel nul, et **en ce qu'**à l'instant suivant (t1) on applique une tension continue (U_{B}) à l'un des conducteurs de phase.

8. Procédé selon la revendication 7,
**caractérisé en ce que** la tension continue (U_{B}) est une tension de service utilisée pour le fonctionnement de la machine électrique par modulation de largeur d'impulsion.

9. Procédé selon l'une des revendications 2 à 8,
**caractérisé en ce que** le dispositif qui impose le potentiel déterminé au centre de l'étoile (6) est interrompu immédiatement après la détermination de la croissance ou des croissances.

10. Procédé selon l'une des revendications 1 à 9,
**caractérisé en ce que** le potentiel au centre de l'étoile est tiré au potentiel déterminé via une liaison comprenant une résistance de mesure (9).

11. Procédé selon l'une des revendications 8 à 10,
**caractérisé en ce que** la différence temporelle entre l'instant suivant (t₁) et l'instant de mesure (t₀) est choisie petite par rapport à la durée des cycles d'impulsion.
